# FASCICULE DE BREVET EUROPEEN

(11) **EP 1 489 283 B1**
(45) Date de publication et mention de la délivrance du brevet: **06.08.2008**
(21) Numéro de dépôt: 04291300.4
(22) Date de dépôt: 19.05.2004
(51) Int. Cl.: F02B 75/20, F02F 1/42, F02B 17/00, F02B 27/02

(54) **Moteur suralimenté à combustion interne à injection indirecte à balayage de gaz brulés et procédé d'alimentation en air suralimenté pour un tel moteur**
Aufgeladene Brennkraftmaschine mit indirekter Einspritzung und EGR und Verfahren zum Einlass von aufgeladener Luft
Supercharged engine with indirect injection , EGR and process for supercharged air admission

(30) Priorité: 20.06.2003 FR 0307578
(43) Date de publication de la demande: 22.12.2004
(73) Titulaire: Institut Français du Pétrole, 92852 Rueil-Malmaison Cedex (FR)
(72) Inventeur: Lecointe, Bertrand,Résidence Ile de France App 242, 92000 Nanterre (FR); Venturi, Stéphane, 07100 Roiffieux (FR); Tilagone, Richard, 38138 Les Cotes d'Arey (FR); Leduc, Pierre, 78650 Beynes (FR); Delpech, Vivien, 69560 Sainte Colombe (FR)

(56) Documents cités:
- DE-A- 19 813 747
- GB-A- 2 115 485
- GB-A- 2 287 985
- US-A- 1 593 989
- US-A- 5 062 396
- US-A- 5 740 767
- US-A- 5 857 450
- US-A- 6 032 634
- PATENT ABSTRACTS OF JAPAN vol. 1995, no. 02, 31 mars 1995 (1995-03-31) & JP 6 330758 A (MAZDA MOTOR CORP), 29 novembre 1994 (1994-11-29)

## Description

La présente invention se rapporte à un moteur à combustion interne suralimenté, notamment un moteur à injection indirecte et à un procédé d'alimentation pour un tel moteur.
Elle concerne plus particulièrement des moyens d'alimentation en air pour moteur suralimenté à balayage des gaz brûlés en phase d'admission.

Comme cela est déjà connu, la puissance délivrée par un moteur est dépendante de la quantité d'air admise dans sa chambre de combustion. Pour augmenter cette puissance, il est utilisé un air d'admission qui est comprimé avant son introduction dans la chambre de combustion du moteur. Cet air, généralement dénommé air suralimenté, est comprimé par tous moyens connus, tels que par un turbocompresseur.

Comme cela a déjà été décrit dans la demande de brevet FR 2 781 011 du demandeur, il est prévu d'accroître encore plus la puissance d'un moteur suralimenté à injection directe en augmentant la quantité d'air suralimenté admise dans la chambre de combustion. Pour ce faire, il est prévu d'évacuer, au début de la phase d'admission de ce moteur, les gaz brûlés résiduels contenus dans la chambre de combustion pour les remplacer par de l'air suralimenté. Cette opération, appelée balayage des gaz brûlés, se réalise par un croisement des soupapes d'échappement et d'admission. A la fin de cette opération, la phase d'admission se poursuit, à la fermeture des soupapes d'échappement, par une injection de carburant dans la chambre de combustion.

Le demandeur a aménagé cette disposition dans le cadre d'un moteur suralimenté à injection indirecte comme mieux décrit dans sa demande de brevet français N° 02/07 693 déposée le 21 juin 2002.
Dans ce moteur, il est prévu de réaliser l'opération de balayage de gaz brûlés grâce à l'ajout d'un moyen d'admission spécifique pour de l'air suralimenté non carburé constitué, pour l'essentiel, d'une tubulure et d'une soupape. Ce moteur comprend donc un premier moyen d'admission prévu pour admettre, dans la chambre de combustion, de l'air suralimenté non carburé lors de l'opération de balayage et un deuxième moyen pour y admettre de l'air suralimenté carburé à la fermeture du premier moyen d'admission. Ainsi, au début de la phase d'admission d'air du moteur, il est prévu de réaliser l'opération de balayage des gaz brûlés en effectuant un croisement des soupapes d'échappement et de la soupape d'admission d'air suralimenté non carburé. Pendant ce croisement, les soupapes d'échappement restent ouvertes et de l'air suralimenté non carburé est admis dans la chambre de combustion par le premier moyen d'admission. Les gaz brûlés résiduels sont ainsi remplacés par de l'air suralimenté non carburé. A la fin de l'opération de balayage, les soupapes d'échappement se ferment et de l'air suralimenté carburé est admis dans la chambre de combustion par l'autre moyen d'admission qui est muni d'un injecteur de carburant dans le cas d'une injection de carburant multipoints.

Généralement, les extrémités libres des tubulures d'admission sont connectées à des moyens d'alimentation en air suralimenté, qui est généralement un collecteur d'admission, dont l'entrée est raccordée à la sortie du moyen de compression de l'air.
Durant le fonctionnement du moteur, l'air suralimenté, qui entre dans le collecteur, alimente de manière globale toutes les tubulures d'admission. Dans ce cas, il risque de se produire un mélange entre l'air suralimenté carburé et l'air suralimenté de la tubulure d'admission d'air non carburé. De ce fait, lorsque se réalise l'opération de balayage au début de la phase d'admission, un air suralimenté partiellement carburé est introduit dans la chambre de combustion pour ensuite être évacué au travers des soupapes d'échappement avec les gaz brûlés.
Ceci génère une consommation accrue de carburant et entraîne une émission de polluants à l'échappement, tels que des hydrocarbures imbrûlés.

Il est également connu par le document US 1 593 989 un moteur à combustion interne suralimenté dans lequel les moyens d'admission sont alimentés en air suralimenté par des moyens d'alimentation comprenant un dispositif d'alimentation en air suralimenté spécifique pour chaque type de moyens d'admission
Ce moteur présente néanmoins l'inconvénient de nécessiter un dispositif de contrôle de l'admission des différents airs qui se révèle compliqué et très sophistiqué pour éviter que de l'air suralimenté carburé ne vienne se mélanger avec de l'air suralimenté non carburé lors des opérations de balayage des gaz brûlés.

Dans le document US 5 857 450, il est en outre précisé que l'on alimente successivement chaque type de moyens d'admission mais le moteur décrit dans ce document a pour inconvénient de nécessiter un piston de forme complexe ainsi que de conduits d'alimentation de configuration compliquée à réaliser.

La présente invention se propose donc de remédier aux inconvénients précités grâce à des moyens d'alimentation d'air suralimenté de conception simple qui évite le court-circuitage du carburant entre les deux moyens d'admission tout en favorisant l'acoustique dans le collecteur.
A cet effet, l'invention concerne un moteur à combustion interne suralimenté, notamment à injection indirecte, comportant au moins un cylindre avec deux types de moyens d'admission en air suralimenté, un type pour l'admission en air suralimenté non carburé et un autre type pour l'admission en air suralimenté carburé, lesdits moyens d'admission étant alimentés en air suralimenté par des moyens d'alimentation comprenant un dispositif d'alimentation en air suralimenté spécifique pour chaque type de moyens d'admission, caractérisé en ce que l'un des dispositifs d'alimentation comprend une entrée d'air suralimenté et des moyens de communication avec l'autre des dispositifs d'alimentation permettant d'alimenter de manière successive chaque dispositif.

De manière préférentielle, le conduit de raccordement peut porter un moyen de vannage.

Les moyens de communication peuvent comprendre un passage dans la partition.

Préférentiellement, ledit passage peut comprendre un moyen anti-retour ou un moyen de vannage.

Les moyens d'alimentation peuvent comprendre une entrée d'air commune aux dispositifs d'alimentation.

L'entrée d'air peut comprendre un moyen de vannage contrôlant l'admission d'air dans chaque dispositif d'alimentation.

De manière préférentielle, le moyen de vannage peut être une vanne papillon.

Les moyens d'alimentation peuvent comprendre une entrée d'air pour chaque dispositif d'alimentation.

L'invention concerne également un procédé d'alimentation en air suralimenté pour moteur à combustion interne suralimenté, notamment à injection indirecte, comportant au moins un cylindre avec deux types de moyens d'admission en air suralimenté, un type pour l'admission en air suralimenté non carburé et un autre type pour l'admission en air suralimenté carburé, lesdits moyens d'admission étant alimentés séparément en air suralimenté par des moyens d'alimentation comprenant un dispositif d'alimentation en air suralimenté spécifique pour chaque type de moyens d'admission, caractérisé en ce qu'on alimente en air suralimenté l'un des dispositifs d'alimentation de manière à alimenter successivement l'autre dispositif d'alimentation par l'intermédiaire de moyens de communication avec l'autre des dispositifs d'alimentation.

Les autres caractéristiques et avantages de l'invention apparaîtront mieux à la lecture de la description qui va suivre, donnée uniquement à titre illustratif et nullement limitatif, en se référant aux dessins annexés sur lesquels :
- la figure 1 montre un cylindre d'un moteur suralimenté à balayage de gaz brûlés utilisé dans la présente invention ;
- la figure 2 montre, en élévation, un moteur utilisant les dispositifs d'alimentation en air selon l'invention et
- les figures 3 à 7 sont des vues frontales, avec coupe partielle suivant la ligne AA de la figure 2, montrant différents modes de réalisation des dispositifs d'alimentation de l'invention en liaison avec la figure 2.

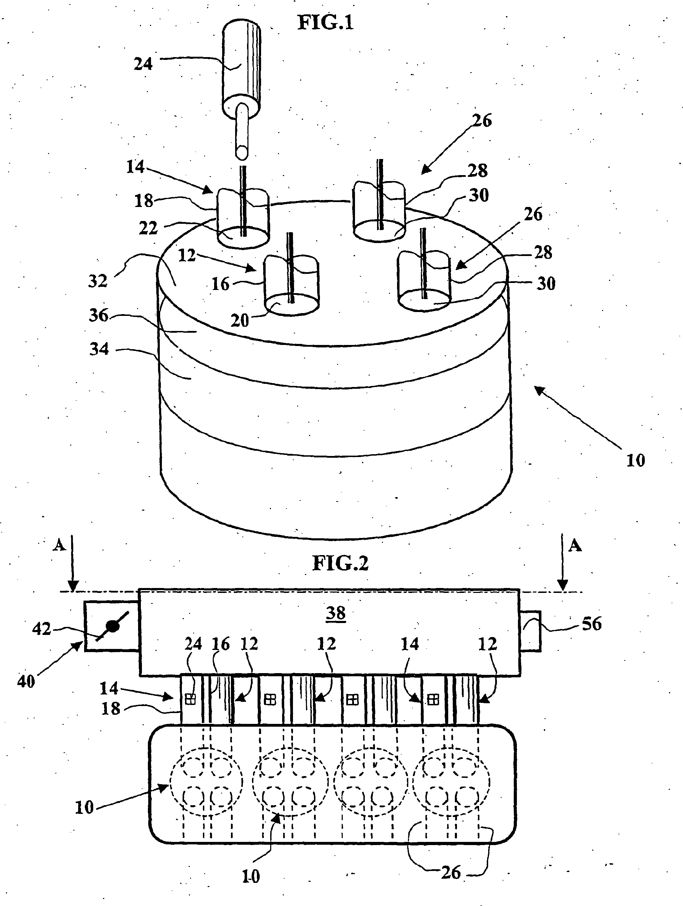

On se rapporte maintenant à la figure 1 qui montre un cylindre 10 d'un moteur à combustion interne suralimenté à injection indirecte, notamment d'essence, et préférentiellement à allumage commandé.
Ce cylindre comprend deux types de moyens d'admission d'air suralimenté 12 et 14 comportant chacun une tubulure d'admission 16 et 18 et un moyen d'obturation, comme une soupape d'admission 20 et 22. La tubulure d'admission 18 porte un moyen d'injection de carburant 24 alors que la tubulure d'admission 16 en est dépourvue. Pour des raisons de simplification dans la suite de la description, la tubulure 16 et la soupape 20 seront désignées comme la tubulure et la soupape d'admission d'air suralimenté non carburé alors que la tubulure d'admission 18 et la soupape 22 seront dénommées en tant que tubulure et soupape d'admission d'air suralimenté carburé.
Ce cylindre comprend également deux moyens d'échappement 26 avec une tubulure d'échappement 28 et un moyen d'obturation 30, tel qu'une soupape d'échappement. Les moyens d'admission et d'échappement sont portés par une culasse 32 qui permet de délimiter, avec la partie haute d'un piston 34, la chambre de combustion 36 de ce cylindre.

Au début de la phase d'admission et au voisinage du point mort haut du piston 34, on réalise un croisement entre les soupapes d'échappement 26 et la soupape d'admission d'air suralimenté non carburé 20 de manière à réaliser l'opération de balayage des gaz brûlés présents dans la chambre 36. Grâce à cela, l'air suralimenté non carburé, qui est à une pression supérieure à celle des gaz brûlés présents dans cette chambre, y est admis et balaye ces gaz pour les évacuer au travers des soupapes d'échappement 30. Dès que les soupapes d'échappement 30 sont fermées, la soupape d'admission d'air carburé 22 est ouverte pour faire admettre dans la chambre de combustion un mélange d'air suralimenté et de carburant.

Comme visible sur la figure 2, le cylindre 10 fait partie d'un moteur qui comporte au moins un cylindre, généralement quatre cylindres, avec la culasse 32 portée par le bloc moteur 33.
Les tubulures d'admission 16 et 18 de chaque cylindre 10 sont raccordées séparément chacune à des moyens d'alimentation en air 38, généralement dénommé collecteur d'admission, qui est connecté par une entrée 40 à la sortie d'un moyen de compression d'air (non représenté), tel qu'un turbocompresseur. L'entrée 40 est avantageusement pourvue d'un moyen de vannage 42, par exemple une vanne de type papillon, qui autorise un réglage de la quantité d'air suralimenté introduite dans ce collecteur.

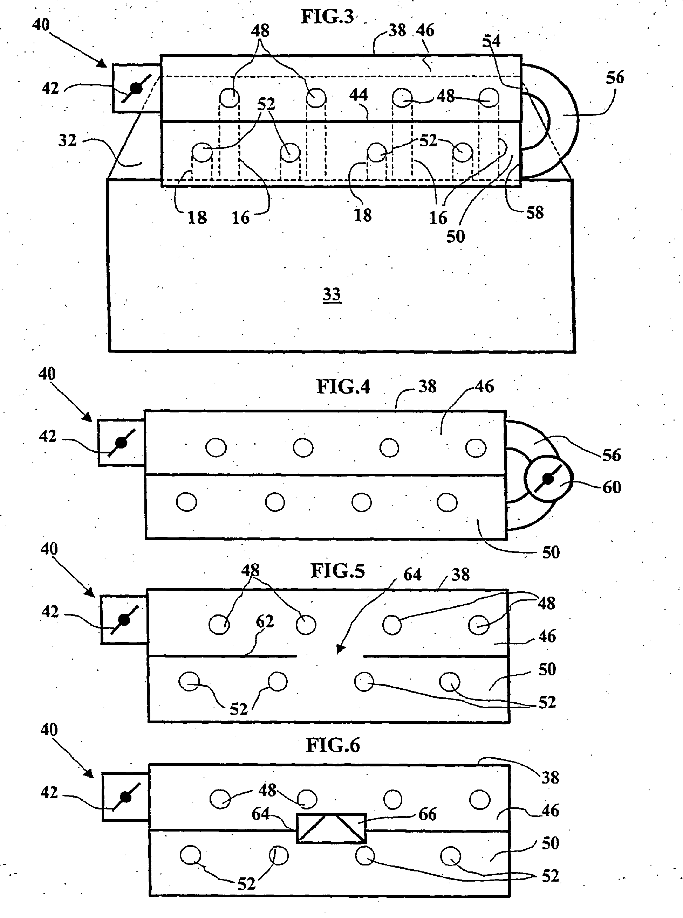

Dans un premier mode de réalisation de l'invention, comme montré à la figure 3, le collecteur d'admission 38 comprend une partition interne 44 permettant de le séparer en deux demi-collecteurs indépendants. De préférence, cette partition est réalisée par une cloison étanche s'étendant horizontalement dans la plus grande longueur du collecteur en le divisant en deux parties sensiblement égales et étanches entre elles. Le premier demi-collecteur 46, dénommé collecteur de balayage, comprend l'entrée d'air suralimenté 40 avec son moyen de vannage 42 et permet d'alimenter par des orifices 48, dit orifices de balayage, chaque tubulure d'admission d'air non carburé 16 des cylindres 10. Le deuxième demi-collecteur 50, dit collecteur d'injection, comprend des orifices 52, appelés orifices d'injection, permettant de mettre en communication les tubulures d'admission d'air suralimenté carburé 18 avec l'intérieur de ce collecteur d'injection. Le collecteur de balayage 46 comprend également une sortie d'air suralimenté 54 qui permet d'alimenter en air suralimenté, par un conduit 56, une entrée d'air 58 prévue dans le collecteur d'injection 50.
Ainsi, il est formé deux dispositifs d'alimentation en air suralimenté distincts ou séparés, un pour chaque type d'admission d'air. Le premier dispositif 46 alimente les tubulures d'admission d'air non carburé 16 et le demi-collecteur 50 alors que le deuxième dispositif alimente uniquement les tubulures d'admission d'air carburé 18.
Durant le fonctionnement du moteur, l'air suralimenté pénètre par l'entrée 40 dans le collecteur de balayage 46 en alimentant les tubulures 16 par les orifices 48 puis alimente, par le conduit 56, les orifices 52 du collecteur d'injection 50 pour les tubulures 18. On obtient ainsi une circulation en série de l'air suralimenté du collecteur de balayage 46 vers le collecteur d'injection 50.
Grâce à cela, pendant l'opération de balayage des gaz brûlés qui est identique à celle décrite dans la demande de brevet français N°02/07 693 du demandeur, il ne peut donc pas y avoir un court-circuitage entre les tubulures 16 et 18. En effet, les orifices de balayage 48 et d'injection 52 sont physiquement séparés par la cloison 44 et il ne peut y voir de communication entre eux. En outre, l'alimentation en air suralimenté se réalise de manière séparée pour les différents types de tubulures d'admission.

Le second mode de réalisation de la figure 4 est sensiblement identique à celui de la figure 3 et comporte pour cela les mêmes références.
Dans ce mode, le conduit de connexion 56 est pourvu d'un moyen de vannage 60, tel qu'une vanne papillon, qui permet de réguler la quantité d'air suralimenté admise dans le collecteur d'injection 50 à partir du collecteur de balayage 46.
Lors du fonctionnement du moteur, la quantité d'air suralimenté est régulée non seulement par la vanne 42 pour l'air admis dans le collecteur de balayage 46 mais aussi par la vanne 60 pour l'air alimentant le collecteur d'injection 50.

Dans le mode de réalisation de la figure 5 voisin de ceux décrits précédemment, le collecteur d'admission 38 est également muni d'une partition permettant de le séparer en un collecteur de balayage 46 et en un collecteur d'injection 50.
Dans cette réalisation, la partition est réalisée par une cloison interne 62 présentant un passage 64 qui permet d'alimenter en air suralimenté le collecteur d'injection à partir du collecteur de balayage. Cette cloison s'étend horizontalement dans la plus grande longueur du collecteur 38 en séparant ce collecteur d'admission en deux parties sensiblement identiques.
L'air suralimenté pénètre dans le collecteur de balayage 46 par l'entrée d'air suralimenté 40 munie de son moyen de vannage 42 pour alimenter les orifices de balayage 48 puis passe dans le collecteur d'injection 50 par le passage 64 pour alimenter les orifices d'injection 52.

Avantageusement comme montré à la figure 6, le passage 64 est muni d'un moyen anti-retour 66, tel qu'un clapet anti-retour, qui empêche l'air suralimenté présent dans le collecteur d'injection 50 de retourner dans le collecteur de balayage 46. Ce moyen anti-retour garantit alors une absence totale de risque de remontée d'air suralimenté carburé vers le collecteur de balayage.

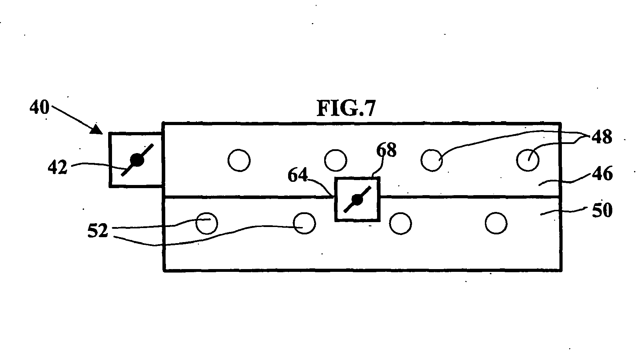

De manière encore plus avantageuse, comme cela est représenté sur la figure 7, le passage 64 est muni d'un moyen de vannage 68, par exemple une vanne papillon, qui permet de réguler, à partir du collecteur de balayage 46, la quantité d'air introduite dans le collecteur d'injection 50.

Dans les exemples montrés aux figures 3 à 7, l'alimentation successive du collecteur de balayage puis du collecteur d'injection permet ainsi d'éviter le phénomène de court-circuitage.

La présente invention n'est pas limitée aux exemples de réalisation décrits mais englobe toutes variantes.

Notamment, il est fait mention, dans les exemples décrits en relation avec les figures 3 à 7, que les collecteurs de balayage et d'injection sont alimentés dans cet ordre par de l'air suralimenté.
Cette configuration est particulièrement favorable pour un fonctionnement aux fortes charges du moteur. Dans le cas d'un fonctionnement aux charges partielles de ce moteur, il peut être prévu d'inverser l'alimentation en air en admettant l'air dans le collecteur d'injection 50 puis dans le collecteur de balayage 46 en disposant l'entré d'air 40 sur le collecteur d'injection.

## Revendications

1. Moteur à combustion interne suralimenté, notamment à injection indirecte, comportant au moins un cylindre (10) avec deux types de moyens d'admission en air suralimenté (12, 14), un type pour l'admission en air suralimenté non carburé (12) et un autre type pour l'admission en air suralimenté carburé (14), lesdits moyens d'admission étant alimentés en air suralimenté par des moyens d'alimentation (38) comprenant un dispositif d'alimentation en air suralimenté (46, 50) spécifique pour chaque type de moyens d'admission (12, 14), **caractérisé en ce que** l'un des dispositifs d'alimentation (46) comprend une entrée d'air suralimenté (40) et des moyens de communication (56, 64) avec l'autre des dispositifs d'alimentation (50) permettant d'alimenter de manière successive chaque dispositif.

2. Moteur selon la revendication 1 dans lequel les moyens d'alimentation comprennent un collecteur d'admission (38), **caractérisé en ce que** ledit collecteur d'admission comprend une partition interne (44, 62, 70, 86) délimitant les dispositifs d'alimentation en air suralimenté (46, 50).

3. Moteur selon la revendication 1, **caractérisé en ce que** les moyens de communication comprennent un conduit (56) raccordant les dispositifs d'alimentation (46, 50).

4. Moteur selon la revendication 3, **caractérisé en ce que** le conduit (56) porte un moyen de vannage (60).

5. Moteur selon la revendication 1 et 2, **caractérisé en ce que** les moyens de communication comprennent un passage (64) dans la partition (62).

6. Moteur selon la revendication 5, **caractérisé en ce que** ledit passage comprend un moyen anti-retour (66).

7. Moteur selon la revendication 5, **caractérisé en ce que** ledit passage comprend un moyen de vannage (68).

8. Procédé d'alimentation en air suralimenté pour moteur à combustion interne suralimenté, notamment à injection indirecte, comportant au moins un cylindre (10) avec deux types de moyens d'admission en air suralimenté (12, 14), un type pour l'admission en air suralimenté non carburé (12) et un autre type pour l'admission en air suralimenté carburé (14), lesdits moyens d'admission étant alimentés séparément en air suralimenté par des moyens d'alimentation (38) comprenant un dispositif d'alimentation en air suralimenté (46, 50) spécifique pour chaque type de moyens d'admission (12, 14), **caractérisé en ce qu'**on alimente en air suralimenté l'un des dispositifs d'alimentation (46) de manière à alimenter successivement l'autre dispositif d'alimentation par l'intermédiaire de moyens de communication (56, 64) avec l'autre des dispositifs d'alimentation (50).

## Claims

1. A supercharged internal combustion engine, particularly an indirect-injection engine, comprising at least one cylinder (10) with two types of supercharged air intake means (12, 14), one type for taking in non-carburetted supercharged air (12) and another type for taking in carburetted supercharged air (14), said intake means being supplied with supercharged air by supply means (38) including a specific supercharged air supply device (46, 50) for each type of intake means (12, 14), **characterised in that** one of the supply devices (46) includes one supercharged air inlet (40) and means (56, 64) for communicating with the other of the supply devices (50) making it possible to supply each device in a successive manner.

2. The engine according to claim 1, in which the supply means include an intake manifold (38), **characterised in that** the said intake manifold includes an internal partition (44, 62, 70, 86) which delimits the supercharged air supply devices (46, 50).

3. The engine according to claim 1, **characterised in that** the communication means include a pipe (56) which connects the supply devices (46, 50).

4. The engine according to claim 3, **characterised in that** the pipe (56) bears a valve means (60).

5. The engine according to claim 1 and 2, **characterised in that** the communication means include a passage (64) in the partition (62).

6. The engine according to claim 5, **characterised in that** said passage includes a non-return means (66).

7. The engine according to claim 5, **characterised in that** said passage includes a valve means (68).

8. A method for supplying supercharged air for a supercharged internal combustion engine, particularly an indirect-injection engine, comprising at least one cylinder (10) with two types of supercharged air intake means (12, 14), one type for taking in non-carburetted supercharged air (12) and another type for taking in carburetted supercharged air (14), said intake means being supplied separately with supercharged air by supply means (38) including a specific supercharged air supply device (46, 50) for each type of intake means (12, 14), **characterised in that** supercharged air is supplied to one of the supply devices (46) so as to successively supply the other supply device by using means for communicating (56, 64) with the other of the supply devices (50).

## Patentansprüche

1. Auflade-Verbrennungsmotor, insbesondere mit indirekter Einspritzung, umfassend mindestens einen Zylinder (10) mit zwei Typen von Einlassmitteln von Aufladeluft (12, 14), einem Typ für den Einlass von nicht vergaster aufgeladener Luft (12) und einem weiteren Typ für den Einlass von vergaster aufgeladener Luft (14), wobei die Einlassmittel mit aufgeladener Luft durch Versorgungsmittel (38) versorgt werden, umfassend eine Vorrichtung zur Versorgung mit aufgeladener Luft (48, 50), die für jeden Typ von Einlassmitteln (12, 14) spezifisch ist, **dadurch gekennzeichnet, dass** eine der Versorgungsvorrichtungen (46) einen Eintritt für aufgeladene Luft (40) und Mittel zur Verbindung (56, 64) mit der anderen der Versorgungsvorrichtungen (50) umfasst, die es ermöglichen, jede Vorrichtung aufeinander folgend zu versorgen.

2. Motor nach Anspruch 1, bei dem die Versorgungsmittel einen Einlasskollektor (38) umfassen, **dadurch gekennzeichnet, dass** der Einlasskollektor eine interne Unterteilung (44, 62, 70, 86) umfasst, die die Vorrichtungen zur Versorgung mit aufgeladener Luft (46, 50) begrenzt.

3. Motor nach Anspruch 1, **dadurch gekennzeichnet, dass** die Verbindungsmittel eine Leitung (56) umfassen, die die Versorgungsvorrichtungen (46, 50) anschließt.

4. Motor nach Anspruch 3, **dadurch gekennzeichnet, dass** die Leitung (56) ein Ventilmittel (60) trägt.

5. Motor nach Anspruch 1 und 2, **dadurch gekennzeichnet, dass** die Verbindungsmittel einen Durchgang (64) in der Unterteilung (62) umfassen.

6. Motor nach Anspruch 5, **dadurch gekennzeichnet, dass** der Durchgang ein Anti-Rückschlagmittel (66) umfasst.

7. Motor nach Anspruch 5, **dadurch gekennzeichnet, dass** der Durchgang ein Ventilmittel (68) umfasst.

8. Verfahren zur Versorgung mit Aufladeluft für einen Auflade-Verbrennungsmotor, insbesondere mit indirekter Einspritzung, umfassend mindestens einen Zylinder (10) mit zwei Typen von Einlassmitteln von aufgeladener Luft (12, 14), einem Typ für den Einlass von nicht vergaster aufgeladener Luft (12) und einem weiteren Typ für den Einlass von vergaster aufgeladener Luft (14), wobei die Einlassmittel getrennt mit Aufladeluft durch die Versorgungsmittel (38) versorgt werden, umfassend eine Vorrichtung zur Versorgung mit aufgeladener Luft (46, 50), die für jeden Typ der Einlassmittel (12, 14) spezifisch ist, **dadurch gekennzeichnet, dass** eine der Versorgungsvorrichtungen (46) mit Aufladeluft versorgt wird, um aufeinander folgend die andere Versorgungsvorrichtung mit Hilfe von Verbindungsmitteln (56, 64) mit der anderen der Versorgungsvorrichtungen (50) zu versorgen.
